# EUROPEAN PATENT APPLICATION

(11) **EP 4 300 654 A1**
(43) Date of publication of application: **03.01.2024**
(21) Application number: 22917649.0
(22) Date of filing: 16.05.2022
(51) Int. Cl.: H01M 10/058

(54) **END COVER, BATTERY CELL, BATTERY, AND ELECTRIC DEVICE**

(71) Applicant: Contemporary Amperex Technology Co., Limited, Ningde City, Fujian 352100 (CN)
(72) Inventor: ZHOU, Wenlin, Ningde, Fujian 352100 (CN); LI, Quankun, Ningde, Fujian 352100 (CN); WANG, Peng, Ningde, Fujian 352100 (CN)
(74) Representative: Rowlands, Stuart Michael
(86) International application number: PCT/CN2022/093133
(87) International publication number: WO 2023/220883

(57) **Abstract**

The present application provides an end cap, a battery cell, a battery and a power consuming device, and relates to the field of batteries. The end cap includes a cap body, a pressure relief boss, and an insulating member, wherein the cap body has a pressure relief region and an outer surface. In a thickness direction of the cap body, the pressure relief boss is arranged on the outer surface in a protruding manner and surrounds the pressure relief region. The insulating member is attached to the outer surface. In the thickness direction, the pressure relief boss does not extend beyond, in a direction facing away from the outer surface, an end of the insulating member that faces away from the outer surface. The pressure relief boss of the end cap does not extend beyond, in the direction facing away from the outer surface, the end of the insulating member that faces away from the outer surface, so that the pressure relief boss has a relatively small height. The pressure relief boss may not press wire harnesses, thereby causing no stress concentration in the wire harnesses, and reducing the possibility of damage to the wire harnesses.

## Description

### Technical Field

The present application relates to the field of batteries, and in particular, to an end cap, a battery cell, a battery and a power consuming device.

### Background

Batteries are widely used in the field of new energy, such as electric vehicles and new-energy vehicles. New-energy vehicles and electric vehicles have become a new trend in development of the automotive industry. Many wire harnesses are arranged inside a battery. However, in the case of an inverted cell, some wire harnesses are often damaged, resulting in battery failure.

### Summary

An objective of embodiments of the present application is to provide an end cap, a battery cell, a battery and a power consuming device, with a view to solving the problem that wire harnesses are often damaged in the prior art, which results in battery failure.

In a first aspect, an embodiment of the present application provides an end cap, the end cap including a cap body, a pressure relief boss, and an insulating member, wherein the cap body has a pressure relief region and an outer surface; in a thickness direction of the cap body, the pressure relief boss is arranged on the outer surface in a protruding manner and surrounds the pressure relief region; and the insulating member is attached to the outer surface; wherein in the thickness direction, the pressure relief boss does not extend beyond, in a direction facing away from the outer surface, an end of the insulating member that faces away from the outer surface.

In the above technical solution, the pressure relief boss of the end cap does not extend beyond, in a direction facing away from the outer surface, the end of the insulating member that faces away from the outer surface, such that the pressure relief boss has a relatively small height. The pressure relief boss may not press wire harnesses, thereby causing no stress concentration in the wire harnesses, and reducing the possibility of damage to the wire harnesses.

As an alternative technical solution of the embodiment of the present application, the insulating member has a covering portion covering the outer surface, the covering portion has a first surface and a second surface which are arranged opposite each other in the thickness direction, the first surface faces the outer surface, the covering portion is provided with a through hole running through the first surface and the second surface, and the pressure relief boss is accommodated in the through hole.

In the above technical solution, the pressure relief boss is accommodated in the through hole running through the first surface and the second surface of the covering portion, such that the pressure relief boss does not extend beyond the second surface in the direction facing away from the outer surface. In this way, the pressure relief boss may not press wire harnesses, thereby causing no stress concentration in the wire harnesses, and reducing the possibility of damage to the wire harnesses.

As an alternative technical solution of the embodiment of the present application, in the thickness direction, a surface of the pressure relief boss that faces away from the outer surface is closer to the outer surface than the second surface.

In the above technical solution, in the thickness direction, the distance between the surface of the pressure relief boss that faces away from the outer surface and the outer surface is less than the distance between the second surface and the outer surface. That is, in the thickness direction, the surface of the pressure relief boss that faces away from the outer surface is lower than the second surface, such that wire harnesses are not prone to contact with the pressure relief boss, thereby causing no the stress concentration in the wire harnesses, and contributing to protecting the wire harnesses from damage.

As an alternative technical solution of the embodiment of the present application, the end cap includes a protective member arranged on the pressure relief boss and covering the pressure relief region, the protective member being at least partially located in the through hole.

In the above technical solution, by providing the protective member, on one hand, the pressure relief region can be protected to prevent external impurities from entering the pressure relief region. On the other hand, the protective member can prevent an electrolyte from entering the pressure relief region during filling the electrolyte.

As an alternative technical solution of the embodiment of the present application, a surface of the protective member that faces away from the pressure relief boss is flush with the second surface.

In the above technical solution, the surface of the protective member that faces away from the pressure relief boss is flush with the second surface, such that the protective member may not protrude from the second surface, and the protective member may not press wire harnesses, thereby causing no stress concentration in the wire harnesses, and reducing the possibility of damage to the wire harnesses.

As an alternative technical solution of the embodiment of the present application, an outer side surface of the protective member is spaced from a wall of the through hole.

In the above technical solution, a gap is provided between the outer side surface of the protective member and the wall of the through hole to facilitate the arrangement of the protective member.

As an alternative technical solution of the embodiment of the present application, the end cap includes a protective member covering the pressure relief region.

In the above technical solution, by providing the protective member, on one hand, the pressure relief region can be protected to prevent external impurities from entering the pressure relief region. On the other hand, the protective member can prevent an electrolyte from entering the pressure relief region during filling the electrolyte.

As an alternative technical solution of the embodiment of the present application, the protective member is arranged on the pressure relief boss, and in the thickness direction, a surface of the protective member that faces away from the outer surface is flush with an end of the insulating member that faces away from the outer surface.

In the above technical solution, the surface of the protective member that faces away from the outer surface is flush with the end of the insulating member that faces away from the outer surface, such that the protective member may not protrude from the insulating member, and the protective member may not press wire harnesses, thereby causing no stress concentration in the wire harnesses, and reducing the possibility of damage to the wire harnesses.

As an alternative technical solution of the embodiment of the present application, in the thickness direction, a surface of the pressure relief boss that faces away from the outer surface is flush with an end of the insulating member that faces away from the outer surface.

In the above technical solution, in the thickness direction, the distance between the surface of the pressure relief boss that faces away from the outer surface and the outer surface is equal to the distance between a surface of the insulating member that faces away from the outer surface and the outer surface. That is, the surface of the pressure relief boss that faces away from the outer surface and the surface of the insulating member that faces away from the outer surface are located in the same plane, such that wire harnesses are not prone to contact with the pressure relief boss, thereby causing no the stress concentration in the wire harnesses, and contributing to protecting the wire harnesses from damage.

In a second aspect, an embodiment of the present application further provides a battery cell, the battery cell including an electrode assembly, a housing and an end cap as described above, wherein the housing has an accommodation space with one end open, and the accommodation space is used for accommodating the electrode assembly; and the end cap is connected to the housing and closes the opening.

In a third aspect, an embodiment of the present application further provides a battery, the battery including a case and a battery cell as described above, wherein the battery cell is accommodated inside the case.

As an alternative technical solution of the embodiment of the present application, the end cap is arranged on a side of the battery cell close to a bottom wall of the case.

In the above technical solution, the end cap is arranged on the side of the battery cell close to the bottom wall of the case, that is, the battery cell is inverted inside the case.

In a fourth aspect, an embodiment of the present application further provides a power consuming device, the power consuming device including a battery as described above, wherein the battery is configured to provide electric energy.

### Brief Description of the Drawings

In order to illustrate the technical solutions of the embodiments of the present application more clearly, the accompanying drawings required in the description of the embodiments of the present application will be described briefly below. It will be apparent that the accompanying drawings described below are merely some embodiments of the present application, and for those of ordinary skill in the art, other accompanying drawings can also be obtained from these accompanying drawings without any creative efforts.
FIG. 1 is a schematic structural diagram of a vehicle according to some embodiments of the present application;
FIG. 2 is an exploded view of a battery according to some embodiments of the present application;
FIG. 3 is a schematic structural diagram of a battery cell according to some embodiments of the present application;
FIG. 4 is a schematic top view of an end cap according to some embodiments of the present application;
FIG. 5 is a sectional view taken along line A-A of FIG. 4;
FIG. 6 is an enlarged view of part B of FIG. 5;
FIG. 7 is a schematic top view of an end cap according to some other embodiments of the present application; and
FIG. 8 is a sectional view taken along line D-D of FIG. 7;
FIG. 9 is an enlarged view of part E of FIG. 8;
FIG. 10 is a schematic top view of an end cap according to still some other embodiments of the present application;
FIG. 11 is a sectional view taken along line F-F of FIG. 10; and
FIG. 12 is an enlarged view of part G of FIG. 11.

List of reference signs: 10 - Case; 11 - First portion; 12 - Second portion; 20 - Battery cell; 21 - End cap; 211 - Cap body; 2111 - Pressure relief region; 2112 - Outer surface; 2113 - Inner surface; 212 - Pressure relief boss; 213 - Insulating member; 2131 - Through hole; 214 - Protective member; 215- Adhesive layer; 22 - Electrode assembly; 23 - Housing; 100 - Battery; 200 - Controller; 300 - Motor; 1000 - Vehicle.

### Detailed Description of Embodiments

In order to make the objectives, technical solutions and advantages of the embodiments of the present application clearer, the technical solutions in the embodiments of the present application will be described clearly below with reference to the accompanying drawings in the embodiments of the present application. It will be apparent that the embodiments described are some of, rather than all of, the embodiments of the present application. All the other embodiments obtained by those of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the description of the present application are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion. The terms "first", "second", etc. in the description and the claims of the present application as well as the foregoing accompanying drawings are used to distinguish between different objects, rather than describing a specific order or a primary-secondary relationship.

In the present application, the term "embodiment" means that the specific features, structures and characteristics described in conjunction with the embodiments may be included in at least one embodiment of the present application. The phrase at various locations in the description does not necessarily refer to the same embodiment, or an independent or alternative embodiment exclusive of another embodiment.

In the description of the present application, it should be noted that, the terms "mount", "connected", "connect", or "attach" should be interpreted in a broad sense unless explicitly defined and limited otherwise. For example, they may be a fixed connection, a detachable connection, or an integral connection; or may be a direct connection, an indirect connection by means of an intermediate medium, or internal communication between two elements. For those of ordinary skill in the art, the specific meanings of the foregoing terms in the present application may be understood according to specific circumstances.

The term "and/or" in the present application is merely a description of the associated relationship of associated objects, representing that three relationships may exist, for example, A and/or B, may be expressed as: only A exists, both A and B exist, and only B exists. In addition, the character "/" in the present application generally indicates that the associated objects before and after the character are in a relationship of "or".

In the embodiments of the present application, the same reference numerals denote the same components, and for the sake of brevity, the detailed description of the same components is omitted in different embodiments. It should be understood that the dimensions, such as thickness, length and width, of the various components in the embodiments of the present application illustrated in the accompanying drawings, as well as the dimensions, such as an overall thickness, length and width, of an integrated apparatus are merely illustrative and should not be construed to limit the present application in any way.

"A plurality of" appearing in the present application means two or more (including two).

In the present application, a battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, etc., which is not limited in the embodiments of the present application. The battery cell may be in the shape of a cylinder, a flat body, a cuboid, etc., which will also not be limited in the embodiments of the present application. The battery cells are generally classified into three types depending on the way of package: cylindrical battery cells, prismatic battery cells and pouch battery cells, which also will not be limited in the embodiments of the present application.

A battery mentioned in the embodiments of the present application refers to a single physical module including one or more battery cells to provide a high voltage and capacity. For example, the battery mentioned in the present application may include a battery module, a battery pack, etc. The battery generally includes a case for packaging one or more battery cells. The case can prevent liquid or other foreign matters from affecting charging or discharging of a battery cell.

The battery cell includes an electrode assembly and an electrolytic solution. The electrode assembly is composed of a positive electrode plate, a negative electrode plate and a separator. The operation of the battery cell mainly relies on the movement of metal ions between the positive electrode plate and the negative electrode plate. The positive electrode plate includes a positive current collector and a positive active material layer. A surface of the positive current collector is coated with the positive active material layer, the positive current collector not coated with the positive active material layer protrudes from the positive current collector coated with the positive active material layer, and the positive current collector not coated with the positive active material layer serves as a positive tab. Taking a lithium-ion battery as an example, the material of the positive current collector may be aluminum, and the positive active material may be lithium cobalt oxides, lithium iron phosphate, ternary lithium or lithium manganate, etc. The negative electrode plate includes a negative current collector and a negative active material layer. A surface of the negative current collector is coated with the negative active material layer, the negative current collector that is not coated with the negative active material layer protrudes from the negative current collector coated with the negative active material layer, and the negative current collector that is not coated with the negative active material layer is used as a negative tab. The negative current collector may be made of copper, and the negative active material may be carbon, silicon, etc. In order to ensure that no fusing occurs when a large current passes, a plurality of positive tabs are provided and are stacked together, and a plurality of negative tabs are provided and are stacked together. The separator may be made of PP (polypropylene), PE (polyethylene), etc. In addition, the electrode assembly may be of a wound structure or a laminated structure, which will not be limited in the embodiments of the present application.

Batteries are widely used in the field of new energy, such as electric vehicles and new-energy vehicles. New-energy vehicles and electric vehicles have become a new trend in development of the automotive industry.

Many wire harnesses are arranged inside a battery. The inventors have noted that in the case of an inverted cell, some wire harnesses are often damaged, resulting in battery failure.

The inventors have found by further studies that in the prior art, the height of a boss around an explosion-proof valve is greater than the height of an insulating member. In this way, in the case of an inverted cell, the boss is prone to squeezing wire harnesses, thereby resulting in the stress concentration in the wire harnesses, and damaging the wire harnesses.

In view of this, an embodiment of the present application provides an end cap, including a cap body, a pressure relief boss, and an insulating member, wherein the pressure relief boss is arranged on an outer surface of the cap body in a protruding manner, and the insulating member is attached to the outer surface. In a thickness direction of the cap body, the pressure relief boss does not extend beyond, in a direction facing away from the outer surface, an end of the insulating member that faces away from the outer surface.

The pressure relief boss of the end cap does not extend beyond, in the direction facing away from the outer surface, the end of the insulating member that faces away from the outer surface, so that the pressure relief boss has a relatively small height. The pressure relief boss may not press wire harnesses, thereby causing no stress concentration in the wire harnesses, and reducing the possibility of damage to the wire harnesses.

The technical solution described in the embodiments of the present application is applicable to a battery and a power consuming device using the battery.

The power consuming device may be a vehicle, a mobile phone, a portable device, a notebook computer, a ship, a spacecraft, an electric toy, an electric tool, etc. The spacecraft includes an airplane, a rocket, an aerospace plane, a spaceship, etc. The electric toy includes a stationary or mobile electric toy, such as a game machine, an electric toy car, an electric toy ship, and an electric toy airplane. The electric tool includes a metal cutting electric tool, a grinding electric tool, an assembling electric tool, and a railway electric tool, such as an electric drill, an electric grinder, an electric wrench, an electric screwdriver, an electric hammer, an electric impact drill, a concrete vibrator, and an electric planer. The power consuming devices mentioned above are not specially limited in the embodiments of the present application.

For ease of description, an example in which the power consuming device refers to a vehicle 1000 is used for description in the following embodiments.

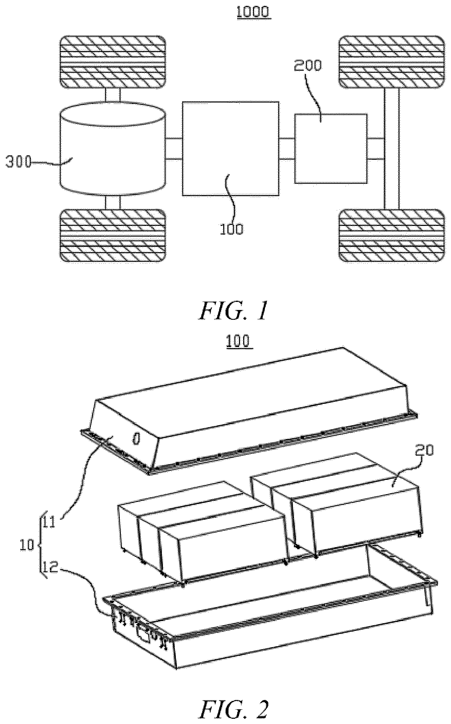

Referring to FIG. 1, FIG. 1 is a schematic structural diagram of a vehicle 1000 provided in some embodiments of the present application. The vehicle 1000 may be a fuel vehicle, a gas vehicle, or a new energy vehicle. The new energy vehicle may be a battery electric vehicle, a hybrid electric vehicle, an extended-range vehicle, etc. A battery 100 is provided inside the vehicle 1000, and the battery 100 may be provided at the bottom, the front or the back of the vehicle 1000. The battery 100 may be configured to supply power to the vehicle 1000. For example, the battery 100 may be used as a power supply for operating the vehicle 1000. The vehicle 1000 may further include a controller 200 and a motor 300. The controller 200 is configured to control the battery 100 to supply power to the motor 300, for example, to meet working power requirements during starting, navigation and traveling of the vehicle 1000.

In some embodiments of the present application, the battery 100 can not only serve as a power supply for operating the vehicle 1000, but also serve as a power supply for driving the vehicle 1000, instead of or partially instead of fuel or natural gas, to provide driving power for the vehicle 1000.

Referring to FIG. 2, FIG. 2 is an exploded view of the battery 100 provided in some embodiments of the present application. The battery 100 includes a case 10 and battery cells 20. The battery cells 20 are accommodated inside the case 10. The case 10 is configured to provide an accommodation space for the battery cells 20, and the case 10 may have various structures. In some embodiments, the case 10 may include a first portion 11 and a second portion 12. The first portion 11 and the second portion 12 cover each other, and the first portion 11 and the second portion 12 jointly define the accommodation space for accommodating the battery cells 20. The second portion 12 may be of a hollow structure with one end open, the first portion 11 may be of a plate-like structure, and the first portion 11 covers an open side of the second portion 12 such that the first portion 11 and the second portion 12 jointly define the accommodation space; and the first portion 11 and the second portion 12 may also be of a hollow structure with one side open, and an open side of the first portion 11 covers the open side of the second portion 12. Of course, the case 10 formed by the first portion 11 and the second portion 12 may be in various forms, such as a cylinder, a cuboid, etc.

In the battery 100, a plurality of battery cells 20 may be provided. The plurality of battery cells 20 may be connected in series, in parallel, or in series-parallel. The series-parallel connection means that the plurality of battery cells 20 are connected both in series and in parallel. The plurality of battery cells 20 may be directly connected together in series, or in parallel, or in series-parallel, and then a unit composed of the plurality of battery cells 20 is accommodated inside the case 10. Of course, the battery 100 may also be a unit accommodated in the case 10 that is formed by firstly connecting the plurality of battery cells 20 in series or in parallel or in series-parallel to battery modules, and then connecting the plurality of battery modules in series or in parallel or in series-parallel. The battery 100 may further include other structures. For example, the battery 100 may further include a busbar component for achieving electrical connections between the plurality of battery cells 20.

Each battery cell 20 may be a secondary battery cell or a primary battery cell, or may also be a lithium-sulfur battery cell, a sodium-ion battery cell, or a magnesium-ion battery cell, but is not limited thereto. The battery cell 20 may be in the form of a cylinder, a flat body, a cuboid, etc.

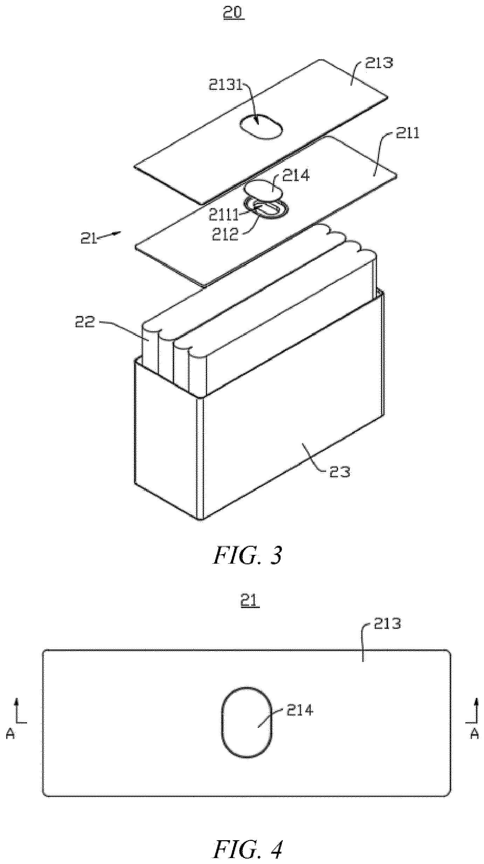

Referring to FIG. 3, FIG. 3 is a schematic exploded structural diagram of the battery cell 20 provided in some embodiments of the present application. The battery cell 20 refers to the smallest unit of the battery 100. As shown in FIG. 3, the battery cell 20 includes an end cap 21, an electrode assembly 22, a housing 23, and other functional components.

The end cap 21 refers to a component that covers an opening of the housing 23 to isolate internal environment of the battery cell 20 from external environment. Without limitation, the end cap 21 may be shaped to adapt to the shape of the housing 23 so as to fit with the housing 23. Optionally, the end cap 21 may be made of a material (e.g., an aluminum alloy) with certain hardness and strength, and thus the end cap 21 would not easily deform when subjected to squeezing or collision, so that the battery cell 20 can have a higher structural strength, and the safety performance can also be improved. Functional components, such as electrode terminals (not shown), may be provided on the end cap 21. The electrode terminals may be used for electrical connection to the electrode assembly 22 for outputting or inputting electric energy of the battery cell 20. The end cap 21 may also be made of various materials, such as copper, iron, aluminum, stainless steel, an aluminum alloy and plastic, which is not specially limited in the embodiments of the present application.

The housing 23 is an assembly that is configured to fit with the end cap 21 so as to create the internal environment of the battery cell 20, wherein the created internal environment may be used for accommodating the electrode assembly 22, an electrolyte and other components. The housing 23 and the end cap 21 may be independent components, and the housing 23 may be provided with an opening, at which the end cap 21 covers the opening to create the internal environment of the battery cell 20. Without limitation, the end cap 21 and the housing 23 may also be integrated. Specifically, the end cap 21 and the housing 23 may firstly form a common connecting surface before other components are placed into the housing, and then the end cap 21 covers the housing 23 when the interior of the housing 23 needs to be packaged. The housing 23 may have various shapes and various sizes, for example, in the form of a cuboid, a cylinder, a hexagonal prism, etc. Specifically, the shape of the housing 23 may be determined depending on the specific shape and size of the electrode assembly 22. The housing 23 may be made of various materials, such as copper, iron, aluminum, stainless steel, an aluminum alloy, plastic, etc., which is not particularly limited in the embodiments of the present application.

The electrode assembly 22 is a component where an electrochemical reaction occurs in the battery cell 20. The housing 23 may include one or more electrode assemblies 22 therein. The electrode assembly 22 is mainly formed by winding or stacking a positive electrode plate and a negative electrode plate, and a separator is generally arranged between the positive electrode plate and the negative electrode plate. The portions of the positive electrode plate and the negative electrode plate that have an active material form a main body portion of the electrode assembly 22, and the portions of the positive electrode plate and the negative electrode plate that have no active material each form a tab. A positive tab and a negative tab may be both located at one end of the main body portion or respectively at two ends of the main body portion. During the charging and discharging of the battery 100, a positive active material and a negative active material react with the electrolyte, and the tabs are connected to the electrode terminals to form a current loop.

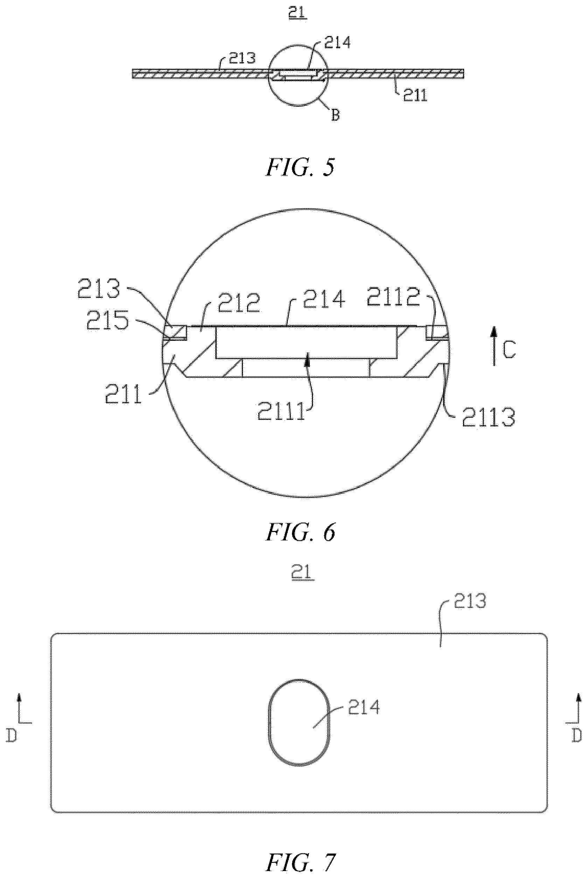

Referring to FIGS. 3, 4, 5 and 6, FIG. 4 is a schematic top view of an end cap 21 provided in some embodiments of the present application. FIG. 5 is a sectional view taken along line A-A of FIG. 4. FIG. 6 is an enlarged view of part B of FIG. 5. Embodiments of the present application provide an end cap 21, the end cap 21 including a cap body 211, a pressure relief boss 212, and an insulating member 213. The cap body 211 has a pressure relief region 2111 and an outer surface 2112. In a thickness direction of the cap body 211, the pressure relief boss 212 is arranged on the outer surface 2112 in a protruding manner and surrounds the pressure relief region 2111. The insulating member 213 is attached to the outer surface 2112. In the thickness direction, the pressure relief boss 212 does not extend beyond, in a direction facing away from the outer surface 2112, an end of the insulating member 213 that faces away from the outer surface 2112.

The cap body 211 is a main structure of the end cap 21, and is mainly configured to close an opening of the housing 23. The cap body 211 is shaped to adapt to the shape of the opening of the housing 23. For example, when the opening of the housing 23 is rectangular, the cap body 211 is also rectangular. When the opening of the housing 23 is circular, the cap body 211 is also circular.

The pressure relief region 2111 is a region on the cap body 211 to implement the pressure relief function. As an example, the pressure relief region 2111 may be a region on the end cap 21 in which an explosion-proof sheet is welded. As another example, the end cap 21 is provided with a pressure relief groove, and the pressure relief region 2111 is a region inside the pressure relief groove.

The pressure relief boss 212 is a protruding structure protruding from a side of the cap body 211 in the thickness direction (direction C as shown in FIG. 6) and arranged around the pressure relief region 2111. The cap body 211 has an inner surface 2113 and an outer surface 2112 opposite each other in the thickness direction. The inner surface 2113 of the cap body 211 faces the interior of the housing 23, and the outer surface 2112 of the cap body 211 is arranged facing away from the housing 23. In this embodiment, the pressure relief boss 212 is arranged on the outer surface 2112 of the cap body 211.

The pressure relief boss 212 is of a protruding structure extending along a closed trajectory. The closed trajectory is a trajectory connected end to end, such as a rectangular trajectory and an elliptical trajectory. When the pressure relief boss 212 is of a protruding structure extending along a rectangular trajectory, the pressure relief boss 212 encloses a rectangle. When the pressure relief boss 212 is of a protruding structure extending along an elliptical trajectory, the pressure relief boss 212 encloses an ellipse. The structure of the pressure relief boss 212 may change with the shape of the closed trajectory, which is not limited in this embodiment.

The insulating member 213 is made of a material having an insulating property, such as plastic or rubber. The insulating member 213 is configured to insulate the cap body 211 from the outside, so as to prevent a short circuit of the battery cell 20 caused by the electrical connection between the cap body 211 and the outside.

The expression "the insulating member 213 is attached to the outer surface 2112" means that the insulating member 213 is attached and fixed to the outer surface 2112. As an example, the insulating member 213 is bonded to the outer surface 2112 by means of an adhesive. As shown in FIG. 6, the insulating member 213 is bonded to the outer surface 2112, and an adhesive layer 215 is formed between the insulating member 213 and the outer surface 2112. As another example, by creating a negative pressure between the insulating member 213 and the outer surface 2112 by suction, the insulating member 213 is attached and fixed to the outer surface 2112 under the action of the atmospheric pressure.

The expression "in the thickness direction, the pressure relief boss 212 does not extend beyond, in a direction facing away from the outer surface 2112, an end of the insulating member 213 that faces away from the outer surface 2112" means that in the thickness direction, the distance between the surface of the pressure relief boss 212 that faces away from the outer surface 2112 and the outer surface 2112 is less than or equal to the distance between the end of the insulating member 213 that faces away from the outer surface 2112 and the outer surface 2112.

The pressure relief boss 212 of the end cap 21 does not extend beyond, in the direction facing away from the outer surface 2112, the end of the insulating member 213 that faces away from the outer surface 2112, so that the pressure relief boss 212 has a relatively small height. The pressure relief boss 212 does not press wire harnesses, thereby causing no stress concentration in the wire harnesses, and reducing the possibility of damage to the wire harnesses.

In some embodiments, the insulating member 213 is provided with a covering portion covering the outer surface 2112, and the covering portion has a first surface and a second surface which are arranged opposite each other in the thickness direction, wherein the first surface faces the outer surface 2112. The covering portion is provided with a through hole 2131 running through the first surface and the second surface, and the pressure relief boss 212 is accommodated in the through hole 2131.

The covering portion refers to a portion of the insulating member 213 that covers the outer surface 2112. As an example, when the cap body 211 is of a plate-like structure, the insulating member 213 is also of a plate-like structure, the outer surface 2112 of the cap body 211 is a flat surface of the cover body 211 away from the housing 23, the entire insulating member 213 covers the outer surface 2112, and the covering portion is the entire insulating member 213. As another example, when the cap body 211 partially protrudes in the thickness direction and in the direction away from the housing 23 to form a first bump, the insulating member 213 also partially protrudes in the thickness direction and in the direction away from the housing 23 to form a second bump to fit with the cap body 211. In this case, the outer surface 2112 refers to a surface of the first bump that faces away from the housing 23, and the covering portion refers to a portion of the insulating member 213 that covers the first bump.

The first surface refers to a surface of the covering portion close to the outer surface 2112, and the second surface refers to a surface of the covering portion that faces away from the outer surface 2112. The first surface and the second surface are arranged opposite each other in the thickness direction of the cap body 211.

The through hole 2131 runs through the first surface and the second surface. The through hole 2131 may be a straight hole extending in the thickness direction or an inclined hole arranged at an angle.

The pressure relief boss 212 is accommodated in the through hole 2131 running through the first surface and the second surface of the covering portion, so that the pressure relief boss 212 does not extend beyond the second surface in the direction facing away from the outer surface 2112. In this way, the pressure relief boss 212 does not press wire harnesses, thereby causing no stress concentration in the wire harnesses, and reducing the possibility of damage to the wire harnesses.

Referring to FIGS. 4, 5 and 6, in some embodiments, in the thickness direction, a surface of the pressure relief boss 212 that faces away from the outer surface 2112 is closer to the outer surface 2112 than the second surface.

The expression "in the thickness direction, a surface of the pressure relief boss 212 that faces away from the outer surface 2112 is closer to the outer surface 2112 than the second surface" may also be understood as that In the thickness direction, the distance between the surface of the pressure relief boss 212 that faces away from the outer surface 2112 and the outer surface 2112 is less than the distance between the second surface and the outer surface 2112. That is, in the thickness direction, the surface of the pressure relief boss 212 that faces away from the outer surface 2112 is lower than the second surface.

The surface of the pressure relief boss 212 that faces away from the outer surface 2112 is closer to the outer surface 2112 than the second surface in the thickness direction, such that wire harnesses are not prone to contact with the pressure relief boss 212, thereby causing no stress concentration in the wire harnesses and contributing to protecting the wire harnesses from damage.

In some embodiments, the end cap 21 includes a protective member 214, and the protective member 214 is arranged on the pressure relief boss 212 and covers the pressure relief region 2111. The protective member 214 is at least partially located in the through hole 2131.

The protective member 214 is a component on the end cap 21 for shielding the pressure relief region 2111. A side of the protective member 214 is attached to the surface of the pressure relief boss 212 away from the outer surface 2112, such that the protective member 214 completely shields the pressure relief region 2111.

The expression "the protective member 214 is at least partially located in the through hole 2131" means that the distance between a surface of the protective member 214 facing the outer surface 2112 and the outer surface 2112 is less than the distance between the second surface and the outer surface 2112, while the distance between a surface of the protective member 214 that faces away from the pressure relief boss 212 and the outer surface 2112 may be less than, equal to or greater than the distance between the second surface and the outer surface 2112.

By providing the protective member 214, on one hand, the pressure relief region 2111 can be protected to prevent external impurities from entering the pressure relief region 2111. On the other hand, the protective member 214 can prevent an electrolyte from entering the pressure relief region 2111 during filling the electrolyte.

Referring to FIGS. 4, 5 and 6, in some embodiments, the surface of the protective member 214 that faces away from the pressure relief boss 212 is flush with the second surface.

The expression "the surface of the protective member 214 that faces away from the pressure relief boss 212 is flush with the second surface" means that the distance between the surface of the protective member 214 that faces away from the pressure relief boss 212 and the outer surface 2112 is equal to the distance between the second surface and the outer surface 2112, or in other words, there is no height difference between the surface of the protective member 214 that faces away from the pressure relief boss 212 and the second surface.

The surface of the protective member 214 that faces away from the pressure relief boss 212 is flush with the second surface, such that the protective member 214 may not protrude from the second surface, and the pressure relief boss 214 does not press wire harnesses, thereby causing no stress concentration in the wire harnesses, and reducing the possibility of damage to the wire harnesses.

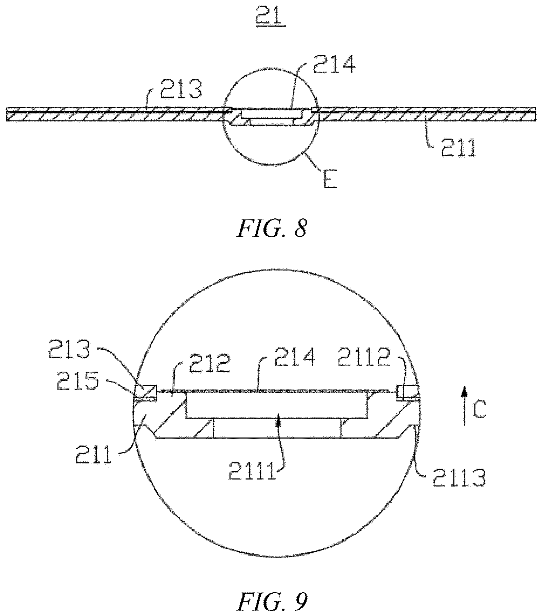

Referring to FIGS. 7, 8 and 9, FIG. 7 is a schematic top view of an end cap 21 provided in some embodiments of the present application. FIG. 8 is a sectional view taken along line D-D of FIG. 7. FIG. 9 is an enlarged view of part E of FIG. 8. In some other embodiments, in the thickness direction, the distance between the surface of the protective member 214 that faces away from the pressure relief boss 212 and the outer surface 2112 is less than the distance between the second surface and the outer surface 2112. That is, the surface of the protective member 214 that faces away from the pressure relief boss 212 is lower than the second surface. In this way, a relatively large avoidance space may be created to avoid wire harnesses and prevent the stress concentration in the wire harnesses caused by the contact between the wire harnesses and the protective member 214.

Referring to FIG. 9, in some embodiments, an outer side surface of the protective member 214 is spaced from a wall of the through hole 2131.

The expression "an outer side surface of the protective member 214 is spaced from a wall of the through hole 2131" may be understood as that the protective member 214 is spaced from the insulating member 213 in a direction perpendicular to the thickness direction of the cap body 211.

A gap is formed between the outer side surface of the protective member 214 and the wall of the through hole 2131 in order to facilitate the arrangement of the protective member 214.

In some embodiments, the end cap 21 includes a protective member 214, and the protective member 214 covers the pressure relief region 2111.

The protective member 214 is a component on the end cap 21 for shielding the pressure relief region 2111. A side of the protective member 214 is attached to the surface of the pressure relief boss 212 away from the outer surface 2112, such that the protective member 214 completely shields the pressure relief region 2111.

By providing the protective member 214, on one hand, the pressure relief region 2111 can be protected to prevent external impurities from entering the pressure relief region 2111. On the other hand, the protective member 214 can prevent an electrolyte from entering the pressure relief region 2111 during filling the electrolyte.

In some embodiments, the protective member 214 is arranged on the pressure relief boss 212, and in the thickness direction, the surface of the protective member 214 that faces away from the outer surface 2112 is flush with an end of the insulating member 213 that faces away from the outer surface 2112.

The expression "the surface of the protective member 214 that faces away from the outer surface 2112 is flush with an end of the insulating member 213 that faces away from the outer surface 2112" also means that the distance between the surface of the protective member 214 that faces away from the outer surface 2112 and the outer surface 2112 is equal to the distance between the surface of the insulating member 213 that faces away from the outer surface 2112 and the outer surface 2112, or in other words, there is no height difference between the surface of the protective member 214 that faces away from the outer surface 2112 and the surface of the insulating member 213 that faces away from the outer surface 2112.

The surface of the protective member 214 that faces away from the outer surface 2112 is flush with the end of the insulating member 213 that faces away from the outer surface 2112, such that the protective member 214 may not protrude from the insulating member 213, and the protective member 214 may not press wire harnesses, thereby causing no stress concentration in the wire harnesses, and reducing the possibility of damage to the wire harnesses.

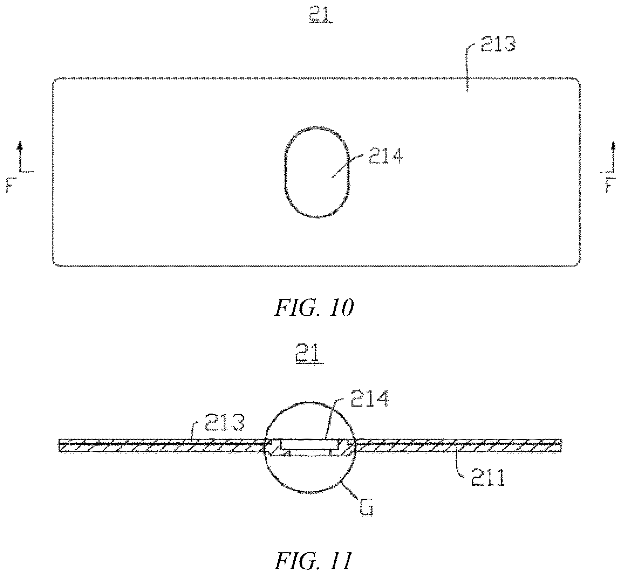

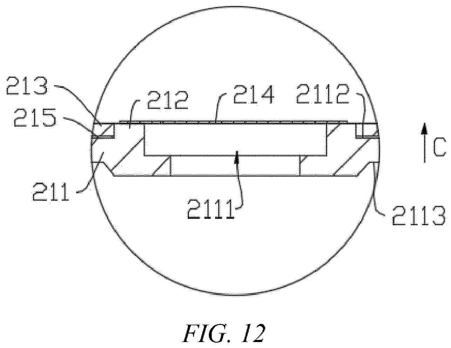

Referring to FIGS. 10, 11 and 12, FIG. 10 is a schematic top view of an end cap 21 provided in some embodiments of the present application. FIG. 11 is a sectional view taken along line F-F of FIG. 10. FIG. 12 is an enlarged view of part G of FIG. 11. In still some other embodiments, in the thickness direction, the surface of the pressure relief boss 212 that faces away from the outer surface 2112 is flush with the end of the insulating member 213 that faces away from the outer surface 2112.

The expression "in the thickness direction, the surface of the pressure relief boss 212 that faces away from the outer surface 2112 is flush with the end of the insulating member 213 that faces away from the outer surface 2112" may also be understood as that in the thickness direction, the distance between the surface of the pressure relief boss 212 that faces away from the outer surface 2112 and the outer surface 2112 is equal to the distance between the surface of the insulating member 213 that faces away from the outer surface 2112 and the outer surface 2112. That is, the surface of the pressure relief boss 212 that faces away from the outer surface 2112 and the surface of the insulating member 213 that faces away from the outer surface 2112 are located in the same plane.

With the above arrangement, wire harnesses are not prone to contact with the pressure relief boss 212, thereby causing no the stress concentration in the wire harnesses, and contributing to protecting the wire harnesses from damage.

Referring to FIG. 12, in some embodiments, the distance between the surface of the protective member 214 that faces away from the outer surface 2112 and the outer surface 2112 is greater than the distance between the surface of the insulating member 213 that faces away from the outer surface 2112 and the outer surface 2112, that is, the surface of the protective member 214 that faces away from the outer surface 2112 is higher than the surface of the insulating member 213 that faces away from the outer surface 2112.

Since the protective member 214 is generally made of a deformable material, such as rubber and plastic, even if the surface of the protective member 214 that faces away from the outer surface 2112 is higher than the surface of the insulating member 213 that faces away from the outer surface 2112, the protective member 214 may deform when the protective member 214 comes into contact with wire harnesses, so as to reduce the risk of stress concentration in the wire harnesses.

An embodiment of the present application further provides a battery cell 20, the battery cell 20 including an electrode assembly 22, a housing 23, and an end cap 21 as described above. The housing 23 has an accommodation space with one end open, the accommodation space being used for accommodating the electrode assembly 22. The end cap 21 is connected to the housing 23 and closes the opening.

An embodiment of the present application further provides a battery 100, the battery 100 including a case 10 and a battery cell 20 as described above, wherein the battery cell 20 is accommodated inside the case 10.

In some embodiments, the end cap 21 is arranged on a side of the battery cell 20 close to a bottom wall of the case 10.

The bottom wall of the case 10 is a wall of the case 10 opposite to the open end of the case 10.

The end cap 21 is arranged on the side of the battery cell 20 close to the bottom wall of the case 10, that is, the battery cell 20 is inverted inside the case 10.

An embodiment of the present application further provides a power consuming device, the power consuming device including a battery 100 as described above, wherein the battery 100 is configured to provide electric energy.

According to some embodiments of the present application, reference is made to FIGS. 3 to 6.

Embodiments of the present application provide an end cap 21, the end cap 21 including a cap body 211, a pressure relief boss 212, and an insulating member 213. The cap body 211 has a pressure relief region 2111 and an outer surface 2112. In a thickness direction of the cap body 211, the pressure relief boss 212 is arranged on the outer surface 2112 in a protruding manner and surrounds the pressure relief region 2111. The insulating member 213 is attached to the outer surface 2112. In the thickness direction, the pressure relief boss 212 does not extend beyond, in a direction facing away from the outer surface 2112, an end of the insulating member 213 that faces away from the outer surface 2112. The insulating member 213 is provided with a covering portion covering the outer surface 2112, and the covering portion has a first surface and a second surface which are arranged opposite each other in the thickness direction, wherein the first surface faces the outer surface 2112. The covering portion is provided with a through hole 2131 running through the first surface and the second surface, and the pressure relief boss 212 is accommodated in the through hole 2131. In the thickness direction, a surface of the pressure relief boss 212 that faces away from the outer surface 2112 is closer to the outer surface than the second surface 2112. The end cap 21 includes a protective member 214, the protective member 214 is arranged on the pressure relief boss 212 and covers the pressure relief region 2111, and the protective member 214 is at least partially located in the through hole 2131. The surface of the protective member 214 that faces away from the pressure relief boss 212 is flush with the second surface. An outer side surface of the protective member 214 is spaced from a wall of the through hole 2131.

The pressure relief boss 212 of the end cap 21 does not extend beyond, in the direction facing away from the outer surface 2112, the end of the insulating member 213 that faces away from the outer surface 2112, so that the pressure relief boss 212 has a relatively small height. The pressure relief boss 212 does not press wire harnesses, thereby causing no stress concentration in the wire harnesses, and reducing the possibility of damage to the wire harnesses. The pressure relief boss 212 is accommodated in the through hole 2131 running through the first surface and the second surface of the covering portion, so that the pressure relief boss 212 does not extend beyond the second surface in the direction facing away from the outer surface 2112. In this way, the pressure relief boss 212 does not press wire harnesses, thereby causing no stress concentration in the wire harnesses, and reducing the possibility of damage to the wire harnesses. In the thickness direction, the distance between the surface of the pressure relief boss 212 that faces away from the outer surface 2112 and the outer surface 2112 is less than the distance between the second surface and the outer surface 2112. That is, in the thickness direction, the surface of the pressure relief boss 212 that faces away from the outer surface 2112 is lower than the second surface, such that wire harnesses are not prone to contact with the pressure relief boss 212, thereby causing no the stress concentration in the wire harnesses, and contributing to protecting the wire harnesses from damage.

By providing the protective member 214, on one hand, the pressure relief region 2111 can be protected to prevent external impurities from entering the pressure relief region 2111. On the other hand, the protective member 214 can prevent an electrolyte from entering the pressure relief region 2111 during filling the electrolyte. The surface of the protective member 214 that faces away from the pressure relief boss 212 is flush with the second surface, such that the protective member 214 may not protrude from the second surface, and the pressure relief boss 214 does not press wire harnesses, thereby causing no stress concentration in the wire harnesses, and reducing the possibility of damage to the wire harnesses.

The foregoing descriptions are merely preferred embodiments of the present application, but are not intended to limit the present application. For those skilled in the art, the present application may have various modifications and variations. Any modifications, equivalent substitutions, improvements, and the like made within the spirit and principle of the present application should fall within the scope of protection of the present application.

## Claims

1. An end cap, comprising:
a cap body having a pressure relief region and an outer surface;
a pressure relief boss surrounding the pressure relief region, wherein in a thickness direction of the cap body, the pressure relief boss is arranged on the outer surface in a protruding manner; and
an insulating member attached to the outer surface, wherein
in the thickness direction, the pressure relief boss does not extend beyond, in a direction facing away from the outer surface, an end of the insulating member that faces away from the outer surface.

2. The end cap according to claim 1, wherein the insulating member has a covering portion covering the outer surface, the covering portion has a first surface and a second surface which are arranged opposite each other in the thickness direction, the first surface faces the outer surface, the covering portion is provided with a through hole running through the first surface and the second surface, and the pressure relief boss is accommodated in the through hole.

3. The end cap according to claim 2, wherein in the thickness direction, a surface of the pressure relief boss that faces away from the outer surface is closer to the outer surface than the second surface.

4. The end cap according to claim 2 or 3, wherein the end cap comprises a protective member arranged on the pressure relief boss and covering the pressure relief region, the protective member being at least partially located in the through hole.

5. The end cap according to claim 4, wherein a surface of the protective member that faces away from the pressure relief boss is flush with the second surface.

6. The end cap according to claim 4 or 5, wherein an outer side surface of the protective member is spaced from a wall of the through hole.

7. The end cap according to claim 1, wherein the end cap comprises a protective member covering the pressure relief region.

8. The end cap according to claim 7, wherein the protective member is arranged on the pressure relief boss, and in the thickness direction, a surface of the protective member that faces away from the outer surface is flush with the end of the insulating member that faces away from the outer surface.

9. The end cap according to claim 1, wherein in the thickness direction, a surface of the pressure relief boss that faces away from the outer surface is flush with the end of the insulating member that faces away from the outer surface.

10. A battery cell, comprising:
an electrode assembly;
a housing having an accommodation space with one end open, the accommodation space being used for accommodating the electrode assembly; and
an end cap according to any one of claims 1-9, wherein the end cap is connected to the housing and closes the opening.

11. A battery, comprising:
a case; and
a battery cell according to claim 10, wherein the battery cell is accommodated inside the case.

12. The battery according to claim 11, wherein the end cap is arranged on a side of the battery cell close to a bottom wall of the case.

13. A power consuming device, comprising a battery according to either of claims 11-12, wherein the battery is configured to provide electric energy.
